# EUROPEAN PATENT APPLICATION

(11) **EP 2 988 555 A1**
(43) Date of publication of application: **24.02.2016**
(21) Application number: 15180999.3
(22) Date of filing: 13.08.2015
(51) Int. Cl.: H04W 52/02, H04W 24/02, H04W 88/08

(54) **METHOD AND DEVICE FOR ADJUSTING STATE OF WIRELESS NETWORK**

(30) Priority: 19.08.2014 CN 201410409378
(71) Applicant: Xiaomi Inc., Beijing 100085 (CN)
(72) Inventor: ZHANG, Pengfei, Haidian District Beijing 100085 (CN); CHEN, Yong, Haidian District Beijing 100085 (CN); QU, Heng, Haidian District Beijing 100085 (CN); LIU, Tiejun, Haidian District Beijing 100085 (CN); PANG, Fangcheng, Haidian District Beijing 100085 (CN)
(74) Representative: Reeve, Nicholas Edward

(57) **Abstract**

The present disclosure relates to adjusting a state of a wireless network (i.e., configuration of a wireless router) by first friendly querying a user . The method includes: monitoring whether a state of the wireless network (e.g., channel quality, received signal intensity) satisfies a condition; when the condition is satisfied, an adjusting prompt to a wireless terminal is sent, wherein the adjusting prompt is used to ask for agreement of adjusting the state of the wireless network; when the device receives an agreement instruction of adjusting returned from the wireless terminal, adjusting the wireless network (e.g., frequency channel, transmit power).

## Description

### TECHNICAL FIELD

The present disclosure generally relates to the field of network setting technologies, and more particularly, to a method and a device for adjusting a state of a wireless network.

### BACKGROUND

In the related art, a wireless router is used for a user to wirelessly access and surf the Internet. The wireless router may be deemed as a transceiver that forwards broadband network signals from a line in a house to nearby wireless terminals (laptop computer supporting WiFi, mobile phone supporting WiFi, and the like) through an antenna.

Since wireless routers are used by a great many families or corporations, channels of the wireless routers of nearby families or corporations may overlap, so that the wireless network signals interfere with one another. At present, the wireless router may automatically switch channels for avoiding interference on signals. The signal quality received by the wireless terminal may be influenced during the course of switching the channel or after switching the channel, which may influence the normal use of the user that results in poor user experience.

### SUMMARY OF THE INVENTION

In order to overcome the problems existing in the related art, embodiments of the present disclosure provide a method and a device for adjusting a state of a wireless network to friendly remind a user whether to adjust a state of a wireless network, and determine whether to adjust the state of the wireless network according to the will of the user.

According to a first aspect of embodiments of the present disclosure, there provides a method for adjusting a state of a wireless network, for use in a wireless router, including: monitoring whether a state of the wireless network satisfies a condition of adjusting the state of the wireless network; when the state of the wireless network satisfies the condition of adjusting the state of the wireless network, sending an adjusting prompt to a wireless terminal, wherein the adjusting prompt is used to ask for agreement of adjusting the state of the wireless network; when the wireless router receives an agreement instruction of adjusting returned from the wireless terminal, adjusting the state of the wireless network; and when the wireless router receives a rejection instruction of adjusting returned from the wireless terminal, keeping the current state of the wireless network.

In one embodiment, the condition of adjusting the state of the wireless network includes: a channel quality of the wireless network used currently is lower than a preset channel quality; or a monitored signal intensity received by the wireless terminal is lower than a preset signal intensity; or a monitored signal intensity emitted by the wireless router is larger than a minimum signal intensity emitted by the wireless router required by a space where the wireless router locates.

In one embodiment, when the condition of adjusting the state of the wireless network is that the channel quality of the wireless network used currently is lower than the preset channel quality, the adjusting the state of the wireless network when the wireless router receives the agreement instruction of adjusting returned from the wireless terminal includes: when the wireless router receives the agreement instruction of adjusting returned from the wireless terminal, switching a first channel used currently into a second channel and reestablishing a wireless network connection.

In one embodiment, when the condition of adjusting the state of the wireless network is that the monitored signal intensity received by the wireless terminal is lower than the preset signal intensity, the adjusting the state of the wireless network when the wireless router receives the agreement instruction of adjusting returned from the wireless terminal includes: when the wireless router receives the agreement instruction of adjusting returned from the wireless terminal, increasing the signal intensity emitted by the wireless router to a preset value.

In one embodiment, when the condition of adjusting the state of the wireless network is that the monitored signal intensity emitted by the wireless router is larger than the minimum signal intensity emitted by the wireless router required by the space where the wireless router locates, the adjusting the state of the wireless network when the wireless router receives the agreement instruction of adjusting returned from the wireless terminal includes: when the wireless router receives the agreement instruction of adjusting returned from the wireless terminal, decreasing the signal intensity emitted by the wireless router, and the decreased signal intensity emitted by the wireless router is equal or larger than the minimum signal intensity emitted by the wireless router.

In one embodiment, the adjusting prompt further includes a state information of the wireless network and/or an adjusting result information.

According to a second aspect of the present disclosure, there provides a device for adjusting a state of a wireless network, including: a monitoring module configured to monitor whether a state of the wireless network satisfies a condition of adjusting the state of the wireless network; a prompting module configured to, when the state of the wireless network satisfies the condition of adjusting the state of the wireless network, send an adjusting prompt to a wireless terminal, wherein the adjusting prompt is used to ask for agreement of adjusting the state of the wireless network; an adjustment module configured to, when the device receives an agreement instruction of adjusting returned from the wireless terminal, adjust the state of the wireless network; and a keeping module configured to, when the device receives a rejection instruction of adjusting returned from the wireless terminal, keep the current state of the wireless network.

In one embodiment, the adjustment module includes: a first adjustment submodule configured to, when the condition of adjusting the state of the wireless network is that a channel quality of the wireless network used currently is lower than a preset channel quality and when the device receives the agreement instruction of adjusting returned from the wireless terminal, switch a first channel used currently into a second channel and reestablish a wireless network connection.

In one embodiment, the adjustment module includes: a second adjustment submodule configured to, when the condition of adjusting the state of the wireless network is that a monitored signal intensity received by the wireless terminal is lower than a preset signal intensity and when the device receives the agreement instruction of adjusting returned from the wireless terminal, increase the signal intensity emitted by the device to a preset value.

In one embodiment, the adjustment module includes: a third adjustment submodule configured to, when the condition of adjusting the state of the wireless network is that the monitored signal intensity emitted by the device is larger than a minimum signal intensity emitted by the device required by a space where the device locates and when the device receives the agreement instruction of adjusting returned from the wireless terminal, decrease the signal intensity emitted by the device, and the decreased signal intensity emitted by the device is equal or larger than the minimum signal intensity emitted by the device.

According to a third aspect of embodiments of the present disclosure, there provides a device for adjusting a state of a wireless network, including: a processor; and a memory for storing instructions executable by the processor, wherein the processor is configured to: monitor whether a state of the wireless network satisfies a condition of adjusting the state of the wireless network; when the state of the wireless network satisfies the condition of adjusting the state of the wireless network, send an adjusting prompt to a wireless terminal, wherein the adjusting prompt is used to ask for agreement of adjusting the state of the wireless network; when the device receives an agreement instruction of adjusting returned from the wireless terminal, adjust the state of the wireless network; and when the device receives a rejection instruction of adjusting returned from the wireless terminal, keep the current state of the wireless network.

According to a fourth aspect of the embodiments of the present disclosure, there is provided a computer program, which when executed on a processor of a wireless router for adjusting a state of a wireless network, performs a method according to the first aspect of embodiments of the present disclosure.

The technical solutions provided by the embodiments of the present disclosure may include the following advantageous effects. The foregoing technical solutions provided by the embodiments of the present disclosure may friendly remind a user whether to adjust the state of the wireless network, and determine whether to adjust the state of the wireless network according to the will of the user, thus improve the usage experience of the user.

It is to be understood that both the foregoing general description and the following detailed description are exemplary and explanatory only and do not limit the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart showing a method for adjusting a state of a wireless network, according to an exemplary embodiment.
Fig. 2 is a flow chart showing a method for adjusting a state of a wireless network, according to a first exemplary embodiment.
Fig. 3 is a flow chart showing a method for adjusting a state of a wireless network, according to a second exemplary embodiment.
Fig. 4 is a flow chart showing a method for adjusting a state of a wireless network, according to a third exemplary embodiment.
Fig. 5 is a block diagram showing a device for adjusting a state of a wireless network, according to an exemplary embodiment.
Fig. 6 is a block diagram showing an adjustment module, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of devices and methods consistent with some aspects related to the disclosure as recited in the appended claims.

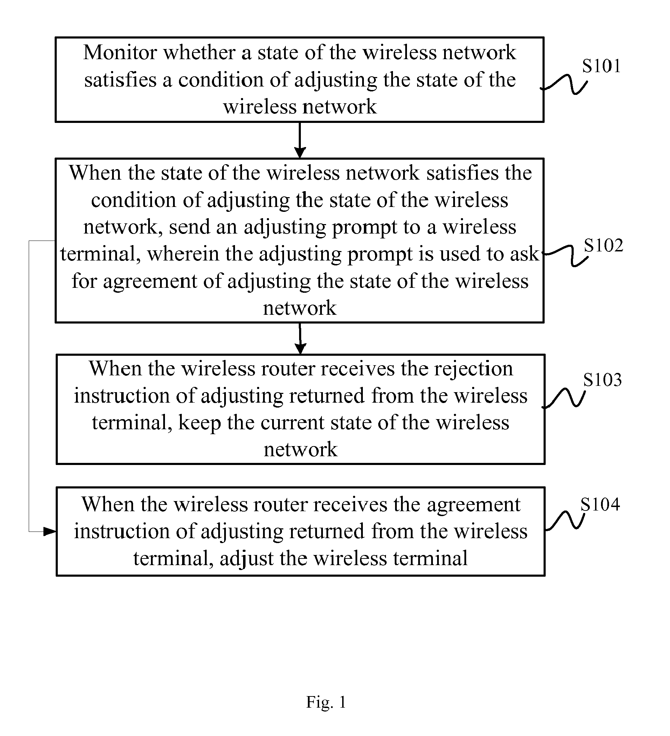

Fig. 1 is a flow chart showing a method for adjusting a state of a wireless network, according to an exemplary embodiment. As shown in Fig. 1, the method is for use in a wireless router, including the following steps of S101-S104.

In step S101, whether a state of the wireless network satisfies a condition of adjusting the state of the wireless network is monitored.

In one embodiment, the condition for adjusting the state of the wireless network may be a first condition that a channel quality of the wireless network used currently is lower than a preset channel quality. The preset channel quality may be represented as a preset channel parameter value, and the channel parameter may be one parameter or more parameters of such parameters as transmission speed, signal to noise ratio, channel gain, noise power, multipath fading and the like. Supposing that the preset channel quality is that the transmission speed is equal to X1, if the transmission speed is lower than X1, the quality of the wireless network channel used currently is determined to be lower than the preset channel quality.

Or, the condition for adjusting the state of the wireless network may be a second condition that a monitored signal intensity received by a wireless terminal is lower than a preset signal intensity, wherein the preset signal intensity may be set from a user according to requirements or by system.

Or, the condition of adjusting the state of the wireless network may be a third condition that a monitored signal intensity emitted by the wireless router is larger than a minimum signal intensity emitted by the wireless router required by a space where the wireless router locates. The signal intensity emitted by the wireless router refers to the intensity of a wireless network signal emitted by the wireless router. Usually, when the space where the wireless router locates is small, the wireless router may satisfy the wireless terminal staying in the space only with a slight signal intensity emitted by the wireless router; and when the space where the wireless router locates is large, the wireless router may satisfy the wireless terminal stayed in the space only with a large signal intensity emitted by the wireless router. Therefore, the size of the space where the wireless router locates may be monitored in advanced (the size of the space where the wireless router locates may be acquired using present image monitoring technologies), and the minimum signal intensity emitted by the wireless router required by the space where the wireless router locates may be determined according to the size of the space where the wireless router locates (the minimum signal intensity emitted by the wireless router may be determined according to existing empirical data).

In step S102, when the state of the wireless network satisfies the condition for adjusting the state of the wireless network, an adjusting prompt is sent to the wireless terminal, wherein the adjusting prompt is used to ask for agreement of adjusting the state of the wireless network.

In one embodiment, the adjusting prompt may be implemented as a query message, for example, similar message like "whether the user agrees to adjust the state of the wireless network" or "whether to subsequently adjust the state of the wireless network" and the like.

In one embodiment, when the state of the wireless network does not satisfy the condition for adjusting the state of the wireless network, the current state of the wireless network is kept.

In step S103, when the wireless router receives a rejection instruction of adjusting returned from the wireless terminal, the current state of the wireless network is kept.

In one embodiment, after the adjusting prompt is sent to the wireless terminal, the wireless terminal displays the adjusting prompt to the user of the wireless terminal. The user inputs selections in the wireless terminal after viewing the adjusting prompt, for example, when the user selects "yes", the wireless terminal may judge that the user agrees adjusting, and then the wireless terminal may returns an agreement instruction of adjusting to the wireless router; and when the user selects "no", the wireless terminal may judge that the user does not agree adjusting, and then the wireless terminal may return a rejection instruction of adjusting to the wireless router.

The wireless router receives the rejection instruction of adjusting returned from the wireless terminal means that the user of the wireless terminal does not agree to adjust state of the wireless network. At this time, the current state of the wireless network is kept and the wireless network is not adjusted, so as to comply with the will of the user and avoid influencing the normal use of the wireless network of the user.

In step S104, when the wireless router receives the agreement instruction of adjusting returned from the wireless terminal, the state of the wireless network is adjusted.

The wireless router receives the agreement instruction of adjusting returned from the wireless terminal means that the user of the wireless terminal agrees to adjust state of the wireless network. At this time, the state of the wireless network is adjusted, so as to comply with the will of the user, even if the user may be influenced in using the network during the process of adjusting. Because the user agrees the adjusting in advance, the user has psychological preparation for the effect caused by the adjusting, thus the usage experience of the user is improved.

In one embodiment, when the state of the wireless network satisfies the foregoing first condition that "the channel quality of the wireless network used currently is lower than the preset channel quality", the step S104 may be executed as that: when the wireless router receives the agreement instruction of adjusting returned from the wireless terminal, it switches a first channel used currently into a second channel and reestablishes a wireless network connection. That is, when the channel quality of the wireless network used currently may not reach an expected channel quality, the wireless router switches the first channel used currently to the second channel, so as to realize the object of improving the channel quality. See subsequent first embodiment for details.

In one embodiment, when the state of the wireless network satisfies the foregoing second condition that "the monitored signal intensity received by the wireless terminal is lower than the preset signal intensity", the step S104 may be executed as that: when the wireless router receives the agreement instruction of adjusting returned from the wireless terminal, it increases the signal intensity emitted by the wireless router to a preset value. Usually, when the monitored signal intensity received by the wireless terminal by the wireless router is small, the wireless network signal quality received by the wireless terminal is poor. In order to ensure that the wireless network signal quality received by the wireless terminal is stable or high, the wireless router will increase the signal intensity emitted by the wireless router to the preset value, so that the signal intensity emitted by the wireless router is enhanced, thus the wireless network signal quality received by the wireless terminal is improved. See subsequent second embodiment for details.

In one embodiment, when the state of the wireless network satisfies the forgoing third condition that "the monitored signal intensity emitted by the wireless router is larger than the minimum signal intensity emitted by the wireless router required by the space where the wireless router locates", the step S104 may be executed as that: when the wireless router receives the agreement instruction of adjusting returned from the wireless terminal, it decreases the signal intensity emitted by the wireless router, and the decreased signal intensity emitted by the wireless router is equal or larger than the minimum signal intensity emitted by the wireless router. That is, when the signal intensity emitted by the wireless router of the wireless router is larger than the minimum signal intensity emitted by the wireless router required by the space where the wireless router locates, in order to avoid unnecessary energy wastes of the wireless router, the signal intensity emitted by the wireless router may be decreased, and the decreased signal intensity emitted by the wireless router is ensured to be capable of satisfying the normal requirement of the wireless terminal in the space where the wireless router locates, thus it is not only capable of avoiding unnecessary energy wastes, but also capable of ensuring the normal requirement of the wireless terminal. See subsequent third embodiment for details.

In one embodiment, beside the foregoing query information, the foregoing adjusting prompt may further include any one or more of state information of the wireless network and adjusting result information, so that the user of the wireless terminal may acquire the state information of the wireless network or the adjusting result information and be clear about the network environment, thus the usage experience of the user is further improved. Wherein the state information of the wireless network, according to actual situations, may be any one or more information of the numbering of the channel used currently, the current signal intensity emitted by the wireless router, the size of the space where the wireless router locates, the signal intensity received by the wireless terminal, and the like. The adjusting result information may be any one or more of the numbering of the channel after switching, and the signal intensity emitted by the wireless router after adjusting.

In one embodiment, the foregoing wireless terminal may be a laptop computer supporting WiFi, a tablet personal computer supporting WiFi, a mobile phone supporting WiFi, and the like.

The foregoing method provided by the embodiments of the present disclosure may friendly remind a user whether to adjust the state of the wireless network, and determine whether to adjust the state of the wireless network according to the will of the user, thus improve the usage experience of the user.

The foregoing method provided by the embodiments of the present disclosure will be explained hereinafter by specific embodiments.

### FIRST EMBODIMENT

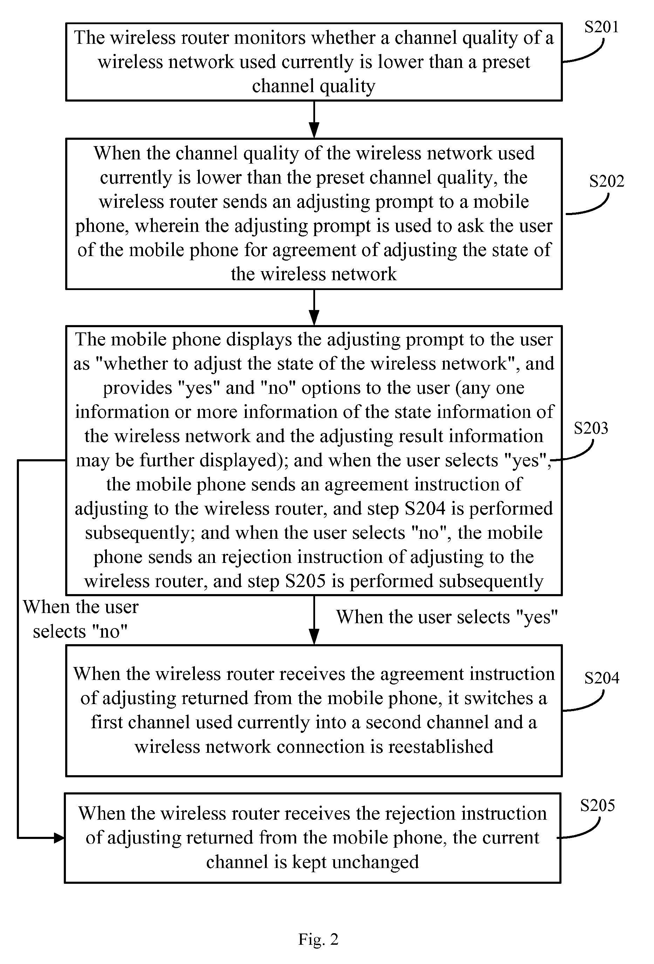

In the first embodiment, a wireless router switches channels using the foregoing method provided by the embodiments of the present disclosure, as shown in Fig. 2, which includes the following steps.

In step S201, the wireless router monitors whether a channel quality of the wireless network used currently is lower than a preset channel quality, and if yes, step S202 is continued, otherwise, the current state of the wireless network is kept.

In step S202, when the channel quality of the wireless network used currently is lower than the preset channel quality, the wireless router sends an adjusting prompt to a mobile phone, wherein the adjusting prompt is used to ask for agreement of adjusting the state of the wireless network.

The foregoing adjusting prompt may further include any one information or more information of state information of the wireless network and adjusting result information.

In step S203, the mobile phone displays the adjusting prompt to a user as "whether to adjust the state of the wireless network", and provides "yes" and "no" options to the user (any one information or more information of the state information of the wireless network and the adjusting result information may be further displayed); and when the user selects "yes", the mobile phone sends an agreement instruction of adjusting to the wireless router, and step S204 is performed subsequently; and when the user selects "no", the mobile phone sends a rejection instruction of adjusting to the wireless router, and step S205 is performed subsequently.

In step S204, when the wireless router receives the agreement instruction of adjusting returned from the mobile phone, it switches a first channel used currently into a second channel and a wireless network connection is reestablished.

In step S205, when the wireless router receives the rejection instruction of adjusting returned from the mobile phone, the current channel is kept unchanged.

The first embodiment may friendly remind a user whether to adjust the state of the wireless network, and determine whether to adjust the state of the wireless network according to the will of the user, thus improve the usage experience of the user.

### SECOND EMBODIMENT

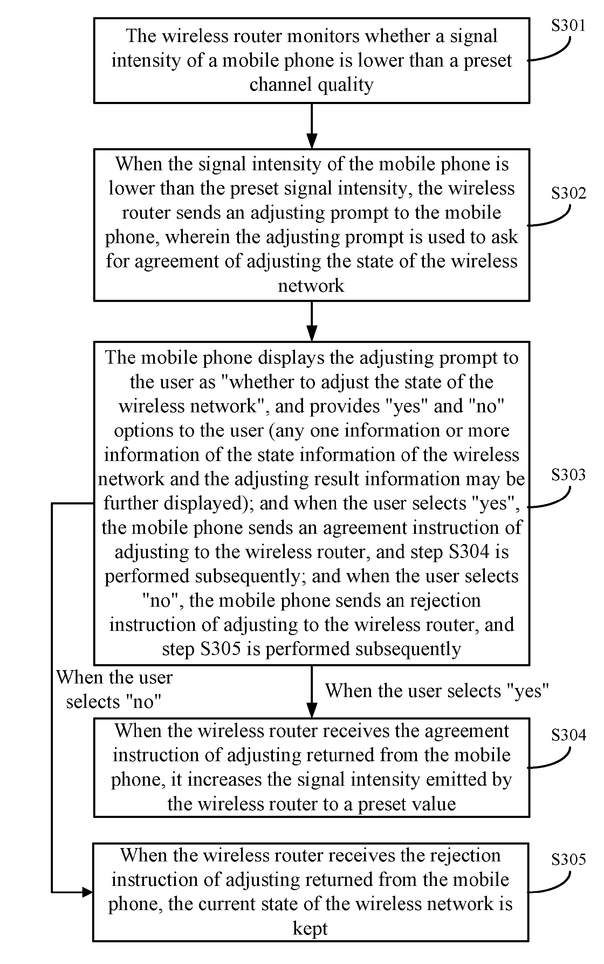

In the second embodiment, a wireless router adjusts the signal intensity by using the foregoing method provided by the embodiments of the present disclosure, as shown in Fig. 3, which includes the following steps.

In step S301, a wireless router monitors whether the signal intensity of a mobile phone is lower than a preset signal intensity, and if yes, step S302 is continued, otherwise, the current state of the wireless network is kept.

In step S302, when the signal intensity of the mobile phone is lower than the preset signal intensity, the wireless router sends an adjusting prompt to the mobile phone, wherein the adjusting prompt is used to ask for agreement of adjusting the state of the wireless network.

The foregoing adjusting prompt may further include any one information or more information of state information of the wireless network and adjusting result information.

In step S303, the mobile phone displays the adjusting prompt to a user as "whether to adjust the state of the wireless network", and provides "yes" and "no" options to the user (any one information or more information of the state information of the wireless network and the adjusting result information may be further displayed); and when the user selects "yes", the mobile phone sends an agreement instruction of adjusting to the wireless router, and step S304 is performed subsequently; and when the user selects "no", the mobile phone sends a rejection instruction of adjusting to the wireless router, and step S305 is performed subsequently.

In step S304, when the wireless router receives the agreement instruction of adjusting returned from the mobile phone, it increases the signal intensity emitted by the wireless router to a preset value.

In step S305, when the wireless router receives the rejection instruction of adjusting returned from the mobile phone, the current state of the wireless network is kept.

The second embodiment may friendly remind a user whether to adjust the state of the wireless network, and determine whether to adjust the state of the wireless network according to the will of the user, thus improve the usage experience of the user.

### THIRD EMBODIMENT

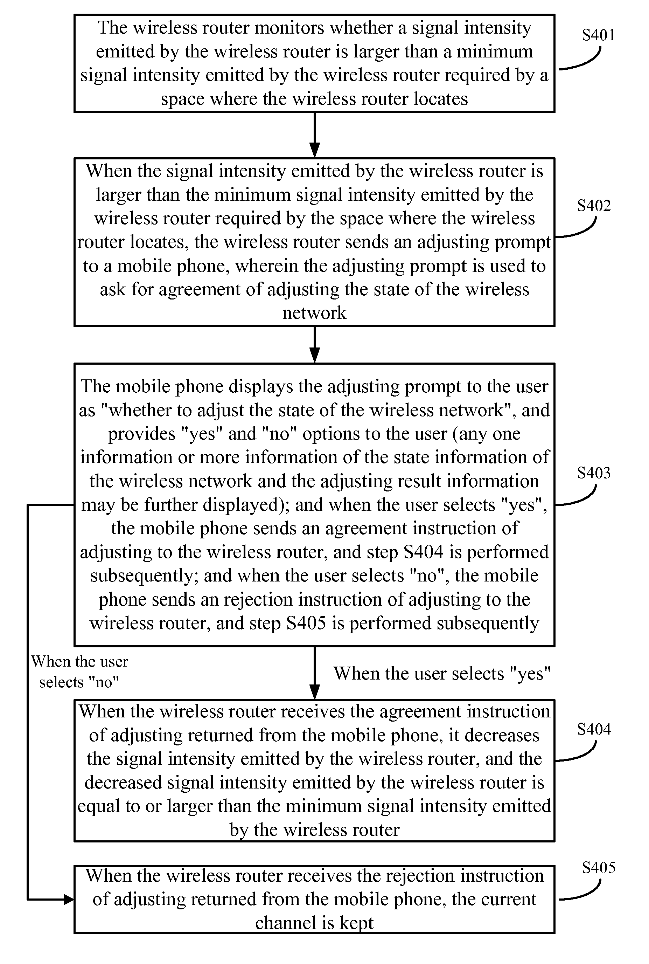

In the third embodiment, a wireless router adjusts the signal intensity by using the foregoing method provided by the embodiments of the present disclosure, as shown in Fig. 4, which includes the following steps.

In step S401, the wireless router monitors whether a signal intensity emitted by the wireless router is larger than a minimum signal intensity emitted by the wireless router required by a space where the wireless router locates, and if yes, step S402 is continued, otherwise, the current state of the wireless network is kept.

In step S402, when the signal intensity emitted by the wireless router is larger than the minimum signal intensity emitted by the wireless router required by the space where the wireless router locates, the wireless router sends an adjusting prompt to a mobile phone, wherein the adjusting prompt is used to ask for agreement of adjusting the state of the wireless network.

In step S403, the mobile phone displays the adjusting prompt to a user as "whether to adjust the state of the wireless network", and provides "yes" and "no" options to the user (any one information or more information of the state information of the wireless network and the adjusting result information may be further displayed); and when the user selects "yes", the mobile phone sends an agreement instruction of adjusting to the wireless router, and step S404 is performed subsequently; and when the user selects "no", the mobile phone sends a rejection instruction of adjusting to the wireless router, and step S405 is performed subsequently.

In step S404, when the wireless router receives the agreement instruction of adjusting returned from the mobile phone, it decreases the signal intensity emitted by the wireless router, and the decreased signal intensity emitted by the wireless router is equal to or larger than the minimum signal intensity emitted by the wireless router.

In step S405, when the wireless router receives the rejection instruction of adjusting returned from the mobile phone, the state of the wireless network is kept.

The third embodiment may friendly remind a user whether to adjust the state of the wireless network, and determine whether to adjust the state of the wireless network according to the will of the user, thus improve the usage experience of the user.

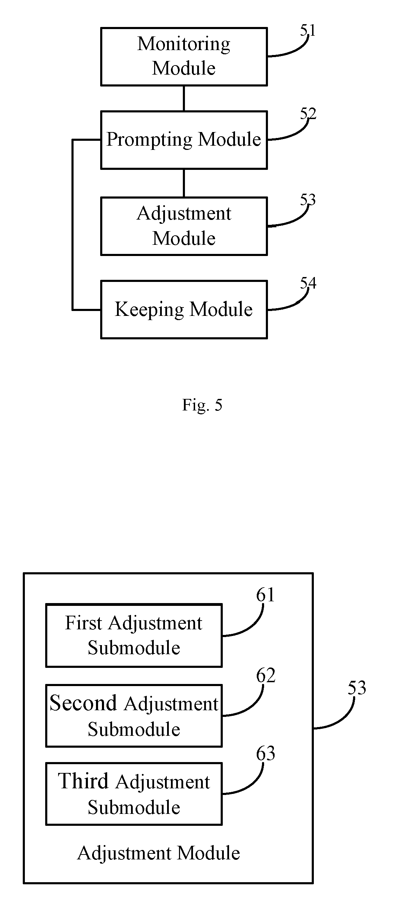

Corresponding to the forgoing method for adjusting a state of a wireless network, embodiments of the present disclosure further provide a device for adjusting a state of a wireless network. As shown in Fig. 5, the device includes: a monitoring module 51 configured to monitor whether a state of the wireless network satisfies a condition of adjusting the state of the wireless network; a prompting module 52 configured to, when the state of the wireless network satisfies the condition of adjusting the state of the wireless network, send an adjusting prompt to a wireless terminal, wherein the adjusting prompt is used to ask for agreement of adjusting the state of the wireless network; an adjustment module 53 configured to, when the device receives an agreement instruction of adjusting returned from the wireless terminal, adjust the state of the wireless network; and a keeping module 54 configured to, when the device receives a rejection instruction of adjusting returned from the wireless terminal, keep the current state of the wireless network.

In one embodiment, as shown in Fig. 6, the adjustment module 53 may include: a first adjustment submodule 61 configured to, when the condition of adjusting the state of the wireless network is that the channel quality of the wireless network used currently is lower than a preset channel quality and when the device receives the agreement instruction of adjusting returned from the wireless terminal, switch a first channel used currently into a second channel and reestablish a wireless network connection; or a second adjustment submodule 62 configured to, when the condition of adjusting the state of the wireless network is that a monitored signal intensity received by the wireless terminal is lower than a preset signal intensity and when the device receives the agreement instruction of adjusting returned from the wireless terminal, increase the signal intensity emitted by the device to a preset value; or a third adjustment submodule 63 configured to, when the condition of adjusting the state of the wireless network is that the monitored signal intensity emitted by the device is larger than a minimum signal intensity emitted by the device required by a space where the device locates and when the device receives the agreement instruction of adjusting returned from the wireless terminal, decrease the signal intensity emitted by the device, and the decreased signal intensity emitted by the device is equal or larger than the minimum signal intensity emitted by the device.

With respect to the devices in the above embodiments, the specific manners for performing operations for individual modules therein have been described in detail in the embodiments regarding the methods, which will not be elaborated herein.

The present disclosure further provides a device for adjusting a state of a wireless network, which includes: a processor; and a memory for storing instructions executable by the processor; wherein the processor is configured to: monitor whether a state of the wireless network satisfies a condition of adjusting the state of the wireless network; when the state of the wireless network satisfies the condition of adjusting the state of the wireless network, send an adjusting prompt to a wireless terminal, wherein the adjusting prompt is used to ask for agreement of adjusting the state of the wireless network; when the device receives an agreement instruction of adjusting returned from the wireless terminal, adjust the state of the wireless network; and when the device receives a rejection instruction of adjusting returned from the wireless terminal, keep the current state of the wireless network.

The processor may be further configured as: the condition of adjusting the state of the wireless network includes: a channel quality of the wireless network used currently is lower than a preset channel quality; or a monitored signal intensity received by a wireless terminal is lower than a preset signal intensity; or a monitored signal intensity emitted by the device is larger than a minimum signal intensity emitted by the device required by a space where the device locates.

The processor may be further configured as: when the condition of adjusting the state of the wireless network is that the channel quality of the wireless network used currently is lower than the preset channel quality, the adjusting the state of the wireless network when the device receives the agreement instruction of adjusting returned from the wireless terminal includes: when the device receives the agreement instruction of adjusting returned from the wireless terminal, switching a first channel used currently into a second channel and reestablishing a wireless network connection.

The processor may be further configured as: when the condition of adjusting the state of the wireless network is that the monitored signal intensity received by the wireless terminal is lower than the preset signal intensity, the adjusting the state of the wireless network when the device receives the agreement instruction of adjusting returned from the wireless terminal includes: when the device receives the agreement instruction of adjusting returned from the wireless terminal, increasing the signal intensity emitted by the device to a preset value.

The processor may be further configured as: when the condition of adjusting the state of the wireless network is that the monitored signal intensity received by the wireless terminal is larger than the minimum signal intensity emitted by the device required by the space where the device locates, the adjusting the state of the wireless network when the device receives the agreement instruction of adjusting returned from the wireless terminal includes: when the device receives the agreement instruction of adjusting returned from the wireless terminal, decreasing the signal intensity emitted by the device, and the decreased signal intensity emitted by the device is equal or larger than the minimum signal intensity emitted by the device.

The processor may be further configured as: the adjusting prompt further includes state information of the wireless network and/or adjusting result information.

The present disclosure further provides a non-transitory computer readable storage medium, which, when instructions in a storage medium are performed by a processor of a wireless router, enables the wireless router to perform a method for adjusting a state of a wireless network, wherein the method includes: monitoring whether a state of the wireless network satisfies a condition of adjusting the state of the wireless network; when the state of the wireless network satisfies the condition of adjusting the state of the wireless network, sending an adjusting prompt to a wireless terminal, wherein the adjusting prompt is used to ask for agreement of adjusting the state of the wireless network; when the wireless router receives an agreement instruction of adjusting returned from the wireless terminal, adjusting the state of the wireless network; and when the wireless router receives a rejection instruction of adjusting returned from the wireless terminal, keeping the current state of the wireless network.

In one embodiment, the condition of adjusting the state of the wireless network includes: a channel quality of the wireless network used currently is lower than a preset channel quality; or a monitored signal intensity received by a wireless terminal is lower than a preset signal intensity; or a monitored signal intensity received by the wireless terminal is larger than a minimum signal intensity emitted by the wireless router required by a space where the wireless router locates.

In one embodiment, when the condition of adjusting the state of the wireless network is that the channel quality of the wireless network used currently is lower than the preset channel quality, the adjusting the state of the wireless network when the wireless router receives the agreement instruction of adjusting returned from the wireless terminal includes: when the wireless router receives the agreement instruction of adjusting returned from the wireless terminal, switching a first channel used currently into a second channel and reestablishing a wireless network connection.

In one embodiment, when the condition of adjusting the state of the wireless network is that the monitored signal intensity received by the wireless terminal is lower than the preset signal intensity, the adjusting the state of the wireless network when the wireless router receives the agreement instruction of adjusting returned from the wireless terminal includes: when the wireless router receives the agreement instruction of adjusting returned from the wireless terminal, increasing the signal intensity emitted by the wireless router to a preset value.

In one embodiment, when the condition of adjusting the state of the wireless network is that the monitored signal intensity emitted by the wireless router is larger than the minimum signal intensity emitted by the wireless router required by the space where the wireless router locates, the adjusting the state of the wireless network when the wireless router receives the agreement instruction of adjusting returned from the wireless terminal includes: when the wireless router receives the agreement instruction of adjusting returned from the wireless terminal, decreasing the signal intensity emitted by the wireless router, and the decreased signal intensity emitted by the wireless router is equal or larger than the minimum signal intensity emitted by the wireless router.

In one embodiment, the adjusting prompt further includes state information of the wireless network and/or adjusting result information.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with the invention being defined only by the following claims.

It will be appreciated that the present disclosure is not limited to the exact construction that has been described above and illustrated in the accompanying drawings, and that various modifications and changes may be made without departing from the scope thereof.

## Claims

1. A method for adjusting a state of a wireless network, for use in a wireless router, **characterized in that**, comprising:
monitoring (101) whether a state of the wireless network satisfies a condition of adjusting the state of the wireless network;
when (102) the state of the wireless network satisfies the condition of adjusting the state of the wireless network, sending an adjusting prompt to a wireless terminal, wherein the adjusting prompt is used to ask for agreement of adjusting the state of the wireless network;
when (103) the wireless router receives an agreement instruction of adjusting returned from the wireless terminal, adjusting the state of the wireless network; and
when (104) the wireless router receives a rejection instruction of adjusting returned from the wireless terminal, keeping the current state of the wireless network.

2. The method according to claim 1, wherein the condition of adjusting the state of the wireless network comprises:
a channel quality of the wireless network used currently is lower than a preset channel quality (201); or
a monitored signal intensity received by the wireless terminal is lower than a preset signal intensity (301); or
a monitored (401) signal intensity emitted by the wireless router is larger than a minimum signal intensity emitted by the wireless router required by a space where the wireless router is located.

3. The method according to claim 2, wherein when the condition of adjusting the state of the wireless network is that the channel quality of the wireless network used currently is lower than the preset channel quality (201), the adjusting the state of the wireless network when the wireless router receives the agreement instruction of adjusting returned from the wireless terminal comprises:
when the wireless router receives the agreement instruction of adjusting returned from the wireless terminal, switching (204) a first channel used currently into a second channel and reestablishing a wireless network connection.

4. The method according to claim 2 or 3, wherein,
when the condition of adjusting the state of the wireless network is that the monitored signal intensity received by the wireless terminal is lower than the preset signal intensity (302), the adjusting the state of the wireless network when the wireless router receives the agreement instruction of adjusting returned from the wireless terminal comprises:
when the wireless router receives the agreement instruction of adjusting returned from the wireless terminal, increasing (304) the signal intensity emitted by the wireless router to a preset value.

5. The method according to claim 2, 3 or 4, wherein,
when the condition of adjusting the state of the wireless network is that the monitored signal intensity emitted by the wireless router is larger than the minimum signal intensity emitted by the wireless router required by the space where the wireless router is located (401), the adjusting the state of the wireless network when the wireless router receives the agreement instruction of adjusting returned from the wireless terminal comprises:
when the wireless router receives the agreement instruction of adjusting returned from the wireless terminal, decreasing (404) the signal intensity emitted by the wireless router, and the decreased signal intensity emitted by the wireless router is equal or larger than the minimum signal intensity emitted by the wireless router.

6. The method according to any one of claims 1 to 5, wherein, the adjusting prompt further comprises a state information of the wireless network and/or an adjusting result information.

7. A device for adjusting a state of a wireless network, **characterized in that**, comprising:
a monitoring module (51) configured to monitor whether a state of the wireless network satisfies a condition of adjusting the state of the wireless network;
a prompting module (52) configured to, when the state of the wireless network satisfies the condition of adjusting the state of the wireless network, send an adjusting prompt to a wireless terminal, wherein the adjusting prompt is used to ask for agreement of adjusting the state of the wireless network;
an adjustment module (53) configured to, when the device receives an agreement instruction of adjusting returned from the wireless terminal, adjust the state of the wireless network;
and
a keeping module (54) configured to, when the device receives a rejection instruction of adjusting returned from the wireless terminal, keep the current state of the wireless network.

8. The device according to claim 7, wherein the adjustment module comprises:
a first adjustment submodule (61) configured to, when the condition of adjusting the state of the wireless network is that a channel quality of the wireless network used currently is lower than a preset channel quality and when the device receives the agreement instruction of adjusting returned from the wireless terminal, switch a first channel used currently into a second channel and reestablish a wireless network connection.

9. The device according to claim 7 or 8, wherein the adjustment module comprises:
a second adjustment submodule (62) configured to, when the condition of adjusting the state of the wireless network is that a monitored signal intensity received by the wireless terminal is lower than a preset signal intensity and when the device receives the agreement instruction of adjusting returned from the wireless terminal, increase the signal intensity emitted by the device to a preset value.

10. The device according to claim 7, wherein the adjustment module comprises:
a third adjustment submodule (63) configured to, when the condition of adjusting the state of the wireless network is that the monitored signal intensity emitted by the device is larger than a minimum signal intensity emitted by the device required by a space where the device locates and when the device receives the agreement instruction of adjusting returned from the wireless terminal, decrease the signal intensity emitted by the device, and the decreased signal intensity emitted by the device is equal or larger than the minimum signal intensity emitted by the device.

11. A device for adjusting a state of a wireless network, **characterized in that**, comprising:
a processor; and
a memory for storing instructions executable by the processor,
wherein the processor is configured to:
monitor whether a state of the wireless network satisfies a condition of adjusting the state of the wireless network;
when the state of the wireless network satisfies the condition of adjusting the state of the wireless network, send an adjusting prompt to a wireless terminal, wherein the adjusting prompt is used to ask for agreement of adjusting the state of the wireless network;
when the device receives an agreement instruction of adjusting returned from the wireless terminal, adjust the state of the wireless network; and
when the device receives a rejection instruction of adjusting returned from the wireless terminal, keep the current state of the wireless network.

12. A computer program, which when executing on a processor of a wireless router for adjusting a state of a wireless network, performs a method according to any one of claims 1 to 6.
